# EUROPEAN PATENT SPECIFICATION

(11) **EP 2 249 347 B1**
(45) Date of publication and mention of the grant of the patent: **07.03.2012**
(21) Application number: 09006131.8
(22) Date of filing: 05.05.2009
(51) Int. Cl.: G11B 33/12, G06F 1/18

(54) **Digital player interface device with exchangeable adapter**
Schnittstellenvorrichtung eines digitalen Abspielgeräts mit Wechseladapter
Dispositif d'interface de lecteur numérique avec un adaptateur échangeable

(43) Date of publication of application: 10.11.2010
(73) Proprietor: Philips & Lite-On Digital Solutions Corporation, Taipei (TW)
(72) Inventor: Rumpf, Horst, 35578 Wetzlar (DE)
(74) Representative: Müller-Boré & Partner Patentanwälte

(56) References cited:
- US-A1- 2004 228 101
- US-A1- 2006 039 263
- US-B1- 6 722 895

## Description

### BACKGROUND OF INVENTION

### 1. Field of the Invention

The present invention relates generally to a digital player interface device with exchangeable adapter, and more particularly to a digital player interface device with exchangeable adapter suitable for various size digital player.

### 2. Description of Related Art

Document US 2004/0228101 A1 discloses computer data reading apparatus which has a reading device installed to one slot of a computer so as to be connected to a joint of a reading unit for inputting data from or outputting data to a computer. The reading device includes a stand, a casing, a supporting plate, a sliding block, a cover and an outer frame. The casing is positioned across an upper side of the stand. Each of front lower sides of the casing has a hook portion. An outer side of the casing has a positioning groove for receiving a push rod. A supporting plate is locked to a rear side of the casing so as to form with a cartridge for receiving and sliding a sliding block. One side of the supporting plate is installed with an input/output port which is coupled to a joint of the reading unit.

Document US 2006/0039263 A1 discloses an audio system with a removable digital media player. The system comprises a base unit that can receive encoded audio signals, output audio signals to a speaker or other audio output device, and interface with a removable digital media player. The digital media player interface may have the ability to receive signals from and output signals to the removable digital media player, and can also charge the battery of the digital media player. The base unit may also contain a memory for buffering and storing output signals from the digital media player or other audio input data. The base unit may also provide advanced playback options of stored audio inputs, including the ability to pause, rewind, record, and replay live audio inputs. Additionally, the base unit of the system may include a removable faceplate.

Document US 6,722,895 B1 discloses an electrical connection of a transfer station which releasably, repeatably electrically couples with respect to a matching connection of a portable cartridge. A substrate in the portable cartridge has electrical contacts on a facing surface. In the transfer station, a matching circuitized flexible substrate has electrical contacts on a facing surface thereof, which are arranged to match the portable cartridge electrical contacts when in a face-to-face relationship. An elastomeric compression element, at the rear of the matching substrate, has individual protruding compression members contacting the rear surface and registered with corresponding individual electrical contacts. Elongated electrical contacts are registered with two adjacent individual compression members. A loader engages the portable cartridge, registering the cartridge substrate contacts in face-to-face relation with the matching flexible substrate electrical contacts, and exerting a normal force to the cartridge to compress the compression element and create non-wiping contact between the facing electrical contacts.

With the development of growing mature digital video technology, a variety of digital video formats have been developed, such as: MP3(ISO-MPEG Audio Player-3), MP4(MPEG-4), RMVB(Real Media Variable Bitrate), which features compactness and exhibits excellent images/voice quality; so digital players are specifically developed along with the widespread permanent flash memory.

Unlike a traditional digital player, the aforementioned digital player mainly uses the flash memory or micro HD as the storage medium other than cassette or CD; thus digital player has been designed and developed with thin-profile and innovative design, among the digital player, iPod player developed by APPLE, is a representative and most popular product in this field.

Each year a new iPod-generation from APPLE comes to the market and these devices get more and more popular. These digital players with music playing and recording function allow people to watch TV and video channels by connecting to computer, amplifier, television and car audio-infotainment-system through a connection interface.

Despite of the functional modification of the aforementioned digital players, there is a big room for improving the interfacing between the digital player and computer, e.g. the digital player is generally interfaced with the computer via an exposed socket, namely, the digital player lacks of a safe storage space, leading possibly to the interference by surroundings or even damage of the thin-profile player; in addition, the terminal adaptor for the player is susceptible to dust against the interfacing performance and appearance.

Thus, to provide a safe and dust-free storage space, it would be advanced if the art could develop an improved structure which is suitable for various kinds of digital player having different size and is capable of data exchanging with the computer and also electric charging.

Accordingly, the present inventor has investigated on the digital player and interface on electronic devices such as computers and thus completed the present invention.

### SUMMARY OF THE INVENTION

The main objective of the present invention is to provide a digital player interface device with exchangeable adapter, which comprising:
an adapter, which is provided with a through hole for load-on/off of a digital player, on its both end a first and a second engaging parts are provided, respectively;
an adapter-fixing element, which comprises a guiding rib and a concavity on its lower surface; wherein a fixing spring is provided in the concavity; and
a chassis, on its top surface a guiding groove, a restriction groove and a adapter snapper are provided, wherein the guiding rib of adapter-fixing element is slid in the guiding groove, the restriction groove is used for accommodating the fixing spring when the adapter-fixing element is at a home position, and the adapter snapper is used for snapping the second engaging part of the adapter when the adapter is placed on the chassis; wherein, when the adapter is sliding on the chassis, the adapter pushes the adapter-fixing element moving along the guiding groove, and the fixing spring is released from the restriction groove to engage the first engaging part of the adapter,
wherein, when the adapter is removed from the chassis, the adapter-fixing element moves back to the home position.

According to the digital player interface device with exchangeable adapter in the present invention, the snapper is elastic and thus it can be down-pressed via a small pin such as paper clip to release the engagement with the second engaging part of the adapter if the adapter is intended to be removed from the device.

According to the digital player interface device with exchangeable adapter in the present invention, the adapter can be designed to various specification suited for various digital players as long as the adapter has the same profile in x- and z-directions. However, the size of the through hole in the adapter can be varied to suit various digital players. By association of the adapter-fixing element with the guiding groove, the restriction groove and the adapter snapper of the chassis, any kind of the adapter can be selected depending on the size of the digital players to be inserted.

According to the digital player interface device with exchangeable adapter in the present invention, the adapter-fixing element further comprises a connector carrier which can move in y-direction of the device; and a locking mechanism;
wherein, a terminal is provided on the connector carrier to be the interface of the digital player with computer, amplifier, television and audio-infotainment-system etc., at least an elastic member is provided between the connector carrier the and the back wall of the adapter-fixing element, so as to press against the connector carrier, and after the digital player contacts the terminal, enable the terminal to slide flexibly within the adapter-fixing element in y-direction, thus keeping the player and terminal in contact.

In the present invention, the locking mechanism can use any push-push locking mechanism well known in the field and is not limited. For example, the locking mechanism can be the following configuration, i.e. the locking mechanism comprises a guiding bulge provided below the connector carrier; a rotatable Y-shape rail, which is used to guide the swinging direction of the locking mechanism when the guiding bulge below the connector carrier shifts along the feature of the Y-shape rail; an elastic arm, which has a free end pressing against the inner wall of the adapter-fixing element so as to adjust flexibly the position and angle of the Y-shape rail with forward and backward swinging of the locking mechanism.

According to the digital player interface device with exchangeable adapter of the present invention, when the digital player is to be loaded on the adapter, the digital player could abut against the terminal and push the connector carrier moving in y-direction to guide the locking mechanism via the guiding bulge to shift forwardly until the digital player in position; when the digital player is to be ejected from the adapter, the digital player is pressed again to abut against the terminal and guide the locking mechanism via the guiding bulge again to shift backwardly and load-off the digital player from the adapter.

Therefore, the digital player interface device with exchangeable adapter of the present invention is suitable for various digital player having different size, can provide a safe and dust-free space for the digital player, and allow the digital player to be safely and reliably linked with computer, amplifier, television and audio-infotainment-system etc.

According to the digital player interface device with exchangeable adapter of the present invention, the elastic member is a compression spring; the connector carrier can slide flexibly within the adapter-fixing element based on the elastic member arranged between the connector carrier and corresponding inner wall of the adapter-fixing element.

According to the digital player interface device with exchangeable adapter of the present invention, the locking mechanism is hinged in adapter-fixing element; through the locking mechanism hinged in the adapter-fixing element and the guiding bulge provided below the connector carrier, the locking mechanism can swing forwards flexibly when the connector carrier moves in y-direction under the pressing force of the digital player; or the locking mechanism can swing backwards when the connector carrier is pressed again by the digital player, meanwhile the digital player can be loaded off from the adapter by releasing the restriction from the locking mechanism.

According to the digital player interface device with exchangeable adapter of the present invention, the Y-shape rail of the locking mechanism is interlocked with the guiding bulge, so the locking mechanism is guided to swing forwards or backwards at an angle; moreover, V concave on the Y-shape rail is used to limit the guiding bulge when it falls into the concave, and then locate the connector carrier and the digital player. Furthermore, if the digital player is pressed again so that the connector carrier is also pushed, the guiding bulge will be guided to be pulled out from V concave and released from its restriction, while the locking mechanism can shift backwards via the elastic force of elastic arm on the locking mechanism, and the connector carrier is pushed to an unlimited position so that the digital player is loaded off from the adapter.

According to the digital player interface device with exchangeable adapter of the present invention, the elastic arm of the locking mechanism is an elastic arm made of elastic materials or a torsional elastic member as long as it can provide the necessary elastic force; the free end of the elastic arm is against on the inner wall of the adapter-fixing element to provide an elastic force for resetting of the locking mechanism.

According to the digital player interface device with exchangeable adapter of the present invention, the aforementioned adapter is used to provide the digital player with a matching space; the dimension of the adapter of the digital player interface device can be properly determined depending on the size of the digital player to be inserted; and the adapter-fixing element can slide on the chassis to adjust its position depending on the adapter size to be placed; thereby the adapter can be replaced with a different one for matching a smaller or bigger digital player, and the position of the adapter-fixing element can also be adjusted to suit the adapter having different dimension.

According to the digital player interface device with exchangeable adapter of the present invention, it can be installed into various electronic apparatus such as computer, TV, car audio-infotainment-system and home audio and video application for digital player information exchange and electric charging, etc.

### BRIEF DESCRIPTION OF THE DRAWINGS

The present invention is illustrated more detail by reference to the accompanying drawings, wherein:
FIG. 1 shows an exploded perspective view of the digital player interface device with exchangeable adapter of the present invention.
FIG. 2 shows a cross-sectional view of the of the digital player interface device with exchangeable adapter of the present invention in which the adapter is inserted and held by the adapter-fixing element.
FIG. 3 shows a cross-sectional view of the digital player interface device with exchangeable adapter of the present invention in which no adapter is inserted and the adapter-fixing element is at home position.
FIG. 4 shows an exploded perspective view of the adapter-fixing element in the digital player interface device of the present invention.
FIG. 5 shows an embodiment of the present invention of installing the digital player interface device in a front desk of an automobile.
FIG. 6 shows another embodiment of the present invention of the digital player interface device wherein the adapter has a through hole with different size.
FIG. 7 shows a perspective view of the digital player interface device with exchangeable adapter of the present invention showing the status of locking mechanism when the digital player is being inserted into the through hole of the adapter.
FIG. 8 shows a perspective view of the digital player interface device with exchangeable adapter of the present invention showing the status of locking mechanism when the digital player contacts the terminal of the connector carrier and pushes it into the adapter-fixing element along an axial direction (i.e. y-direction).
FIG. 9 shows a status view of the locking mechanism when the digital player has been already located in the adapter of the digital player interface device of the present invention.
FIG. 10 shows a status view of the locking mechanism when the digital player is being loaded off from the digital player interface device of the present invention.
FIG. 11 shows a status view of the locking mechanism when the digital player has been loaded off from digital player interface device of the present invention.

### DETAILED DESCRIPTION OF THE INVENTION

The present invention is illustrated in more detail by reference the following preferred embodiments which are only used for illustration without limiting the scope of the present invention.

In the present invention, the term "home position" means the position that the adapter-fixing element is in its original position where no adapter is inserted.

In the present invention, the y-direction is defined as the direction of the digital player inserting into the device, and x-direction is defined as the direction along the width of the digital player, and z-direction is defined as the direction along the thickness of the digital player.

In the description of the present invention, the terms "front" and "back" indicate the direction shown in the drawings, while the terms "swing forward" indicates rightward rotation in the drawing, and "swing backward" indicates leftward rotation in the drawing.

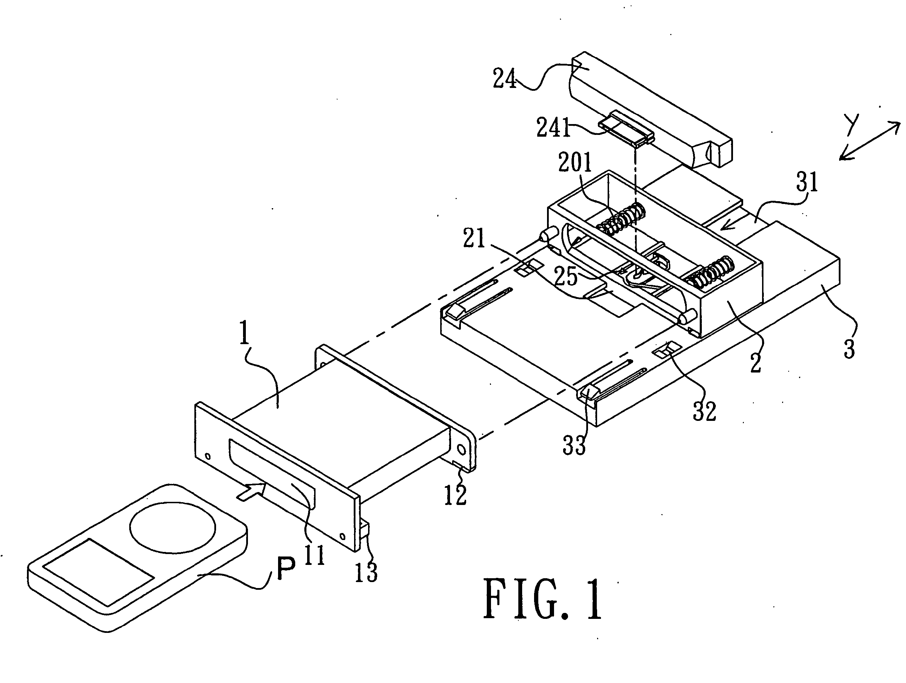

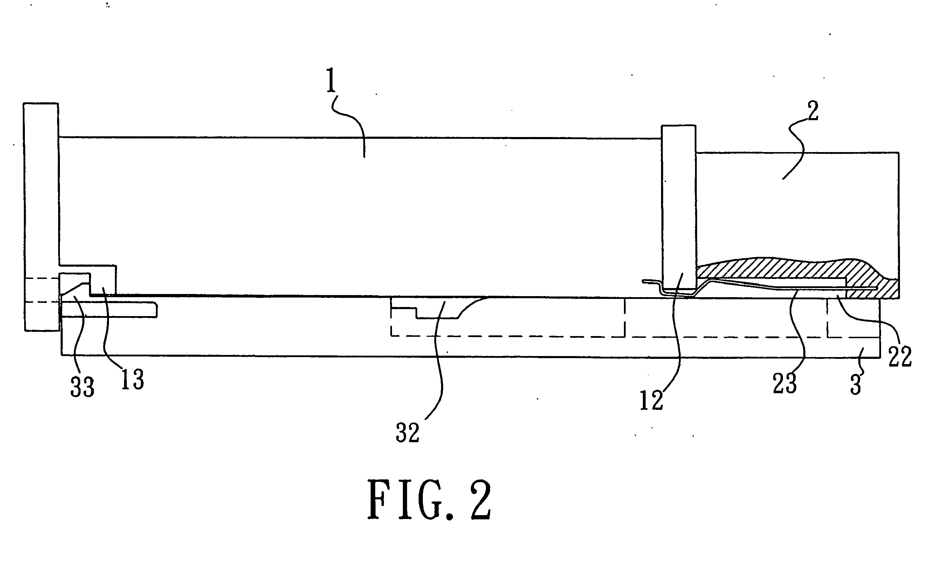

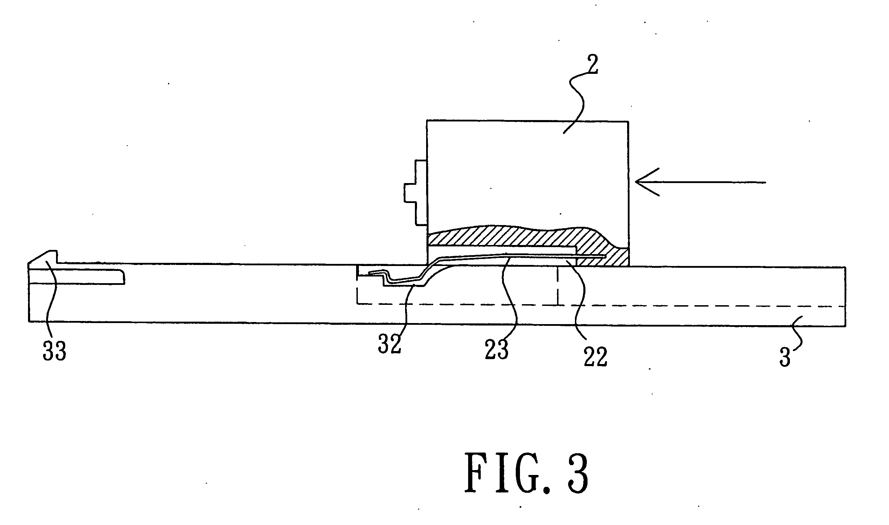

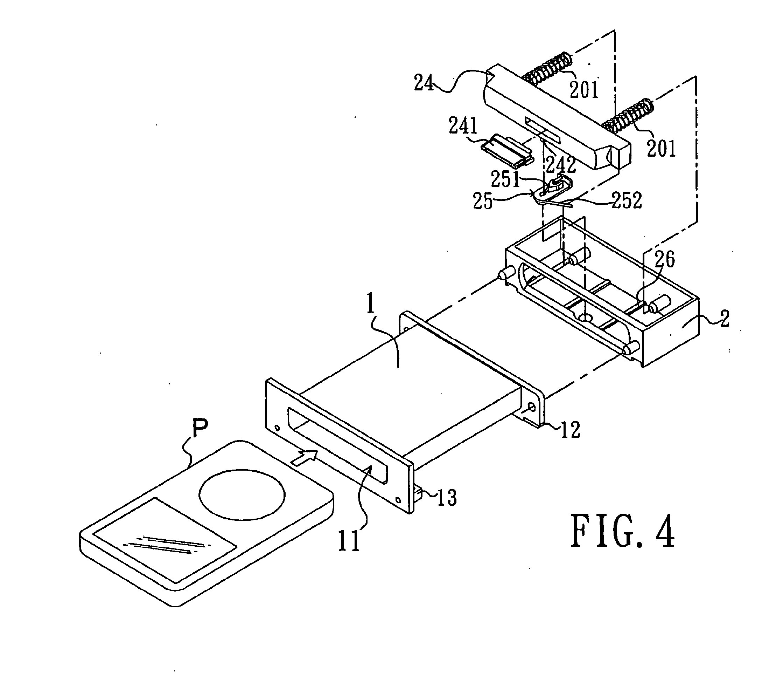

FIG. 1 depicts an exploded perspective view of the digital player interface device with exchangeable adapter of the present invention; FIG. 2 depicts a cross-sectional view of the of the digital player interface device with exchangeable adapter of the present invention in which the adapter is inserted and held by the adapter-fixing element; FIG. 3 shows a cross-sectional view of the digital player interface device with exchangeable adapter of the present invention in which no adapter is inserted and the adapter-fixing element is at home position; and FIG. 4 shows an exploded perspective view of the adapter-fixing element in the digital player interface device of the present invention.

As shown in the drawings, the digital player interface device of the present invention includes a adapter 1, which is provided with a through hole 11 for axial load-on/off of the digital player P, on its both end a first engaging part 12 and a second engaging part 13 are provided, respectively; a adapter-fixing element 2, which comprises a guiding rib 21 and a concavity 22 on its lower surface, wherein a fixing spring 23 is provided in the concavity 22 (as shown in FIGS. 2 and 3) for engaging the first engaging element 12; and a chassis 3, on its top surface a guiding groove 31 for the guiding rib 21 of adapter-fixing element 2 sliding there, a restriction groove 32 for accommodating and restricting the fixing spring 23; and a adapter snapper 33 for snapping the second engaging part 13 of the adapter 1 are provided.

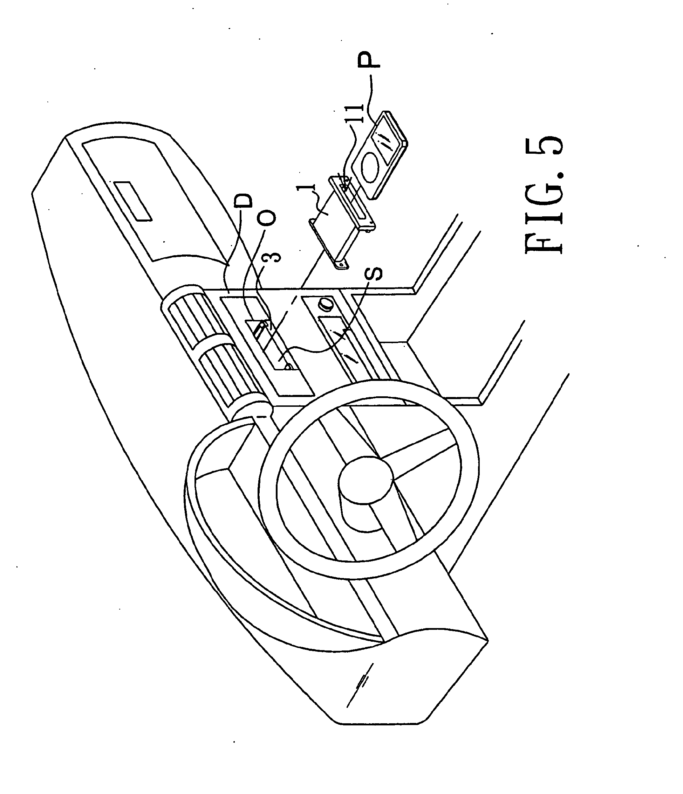

The chassis can be installed in a space with an opening of other apparatuses for receiving the adapter. Refer to FIG. 5, FIG. 5 shows an embodiment of the present invention of installing the digital player interface device in a front desk of an automobile. The chassis 3 can be installed in a space S formed inside the front desk D of the automobile, and an opening O is formed on the front desk D connecting to the space S. Moreover, the adapter 1 is loaded on the chassis 3 from the opening O.

When the adapter 1 is slid and loaded on the chassis 3, the adapter 1 touches and pushes the adapter-fixing element 2 moving along the guiding groove 31, meanwhile, the fixing spring 23 will be released from restricting of the restriction groove 32 on the chassis 3 to engage the first engaging part 12 of the adapter 1 and move together with the adapter-fixing element 2. When the adapter-fixing element 2 is pushed to the end of the chassis 3, the snapper 33 engages with the second engaging part 13 so that the adapter 1 is fixed on the chassis 3 as shown in FIG. 2.

When the adapter 1 is removed from the device, the snapper 33 is down-pressed via a small pin such as paper clip to release the engagement with the second engaging part 13 of the adapter 1 for pulling out the adapter 1. As the fixing spring 23 holds the adapter 1, the adapter-fixing element 2 is moved together with the adapter 1 until the fixing spring 23 returns to the restriction groove 32 and releases the adapter 1. At that time, the adapter-fixing element 2 moves back to the home position.

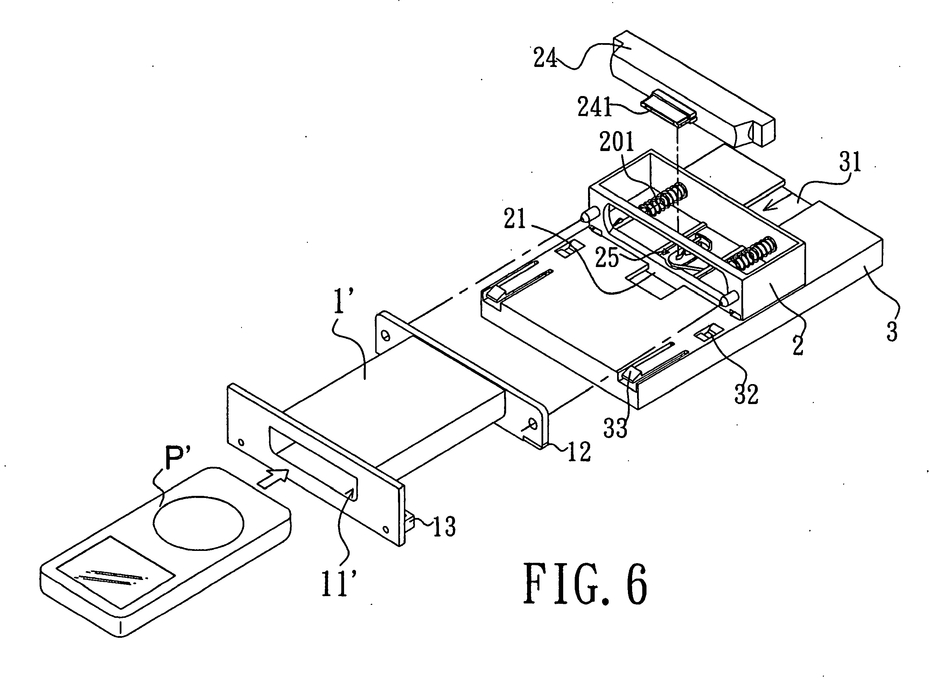

In the embodiment of the present application, another adapter is disclosed to have the same structure of the adapter 1, except for the size of the through hole. Refer to FIG. 6, FIG. 6 shows another embodiment of the present invention of the digital player interface device wherein the adapter 1' has a through hole 11' with different size. The through hole 11' of the another adapter 1' has a different size for placing the digital player P' with different size. As the structures of the adapter 1 and the another adapter 1', except the through hole 11 and 11', are the same for matting with the chassis 3, user can exchange the adapters 1, 1' for placing the digital players P, P' with different sizes. In the FIG. 6, the through hole 11' of the adapter 1' has a size smaller than that of the adapter 1 shown in FIG. 4 for placing a smaller digital player P'.

In the embodiment of the present application, the adapter-fixing element 2 further comprises a connector carrier 24 which can move in y-direction of the device; and a locking mechanism 25; in which a terminal 241 is provided on the connector carrier 24 at the side communicated with the adapter 1; and at least an elastic member 201 is provided between the connector carrier 24 and the corresponding inner wall of the adapter-fixing element 2, so as to provide an elastic force on the connector carrier 24 toward the adapter 1. When placing the digital player P into the through hole 11, the digital player P contacts the terminal 241, and the elastic member 201 enable the terminal 241 to slide flexibly within the adapter-fixing element 2, thus keeping the digital player P and terminal 241 in contact. Thus, when the digital player P is loaded to the through hole 11 of the adapter 1 and gets in contact with the terminal 241, the connector carrier 24 will be pushed by the digital player P to move in y-direction of the device, so the continuous contact between the terminal of digital player P and terminal 241 can be kept by the compressive force provided by the elastic member 201; conversely, when the digital player P is loaded off from the adapter 1, the connector carrier 24 will push the digital player P out of the adapter 1 via the resilience force provided by the elastic member 201.

In the present invention, the locking mechanism can use any push-push locking mechanism well known in the field and is not limited. For example, it can use the one having the following configuration, i.e. the locking mechanism 25 comprises a guiding bulge 242 provided below the connector carrier 24; a rotatable Y-shape rail 251, which is used to guide the swinging direction of the locking mechanism 25 when the guiding bulge 242 shifts along the Y-shape rail 251; an elastic arm 252, which has a free end pressing against the inner rib 26 of the adapter-fixing element 2 so as to adjust flexibly the position and angle of the Y-shape rail 251. with forward and backward swinging of the locking mechanism 25.

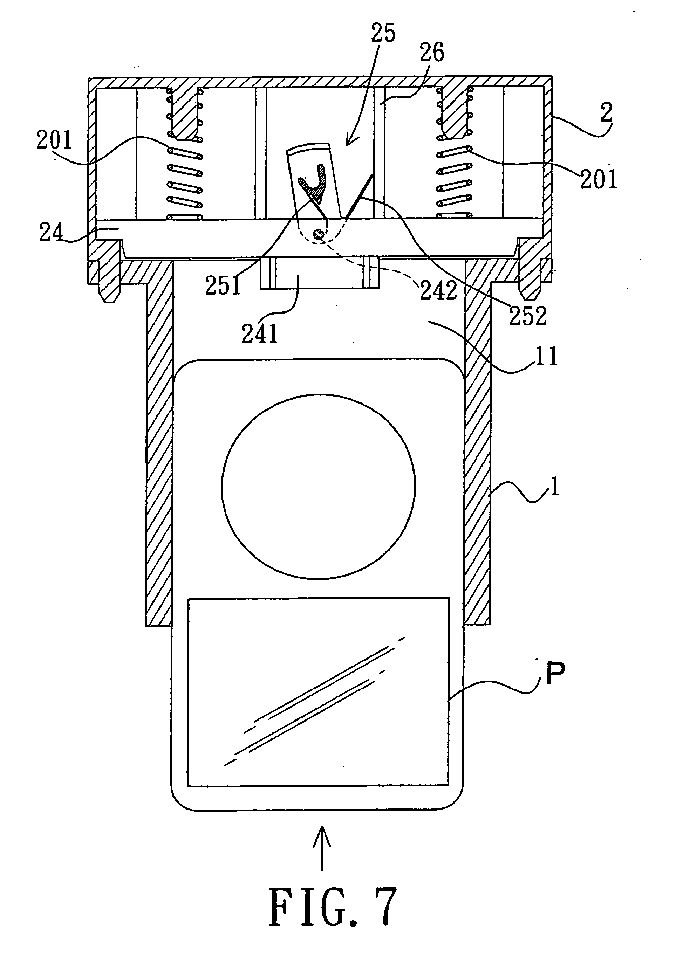

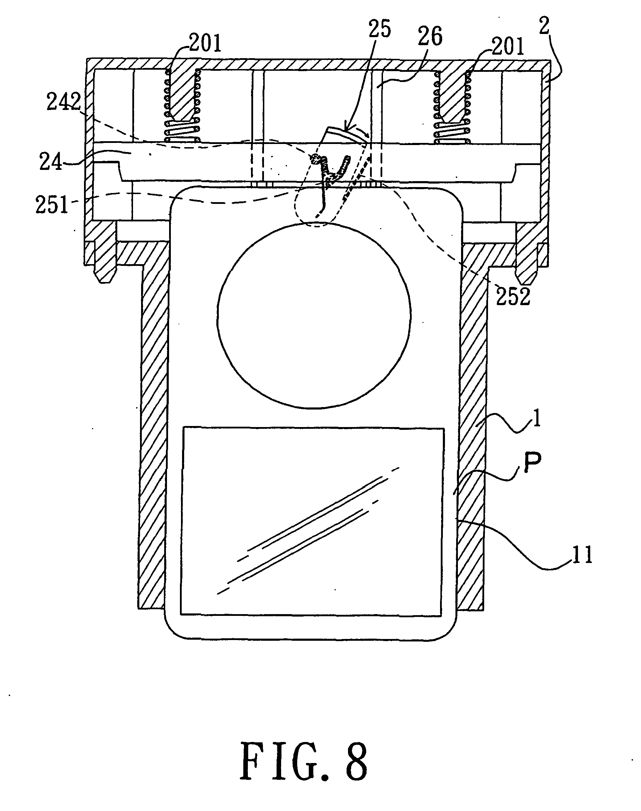

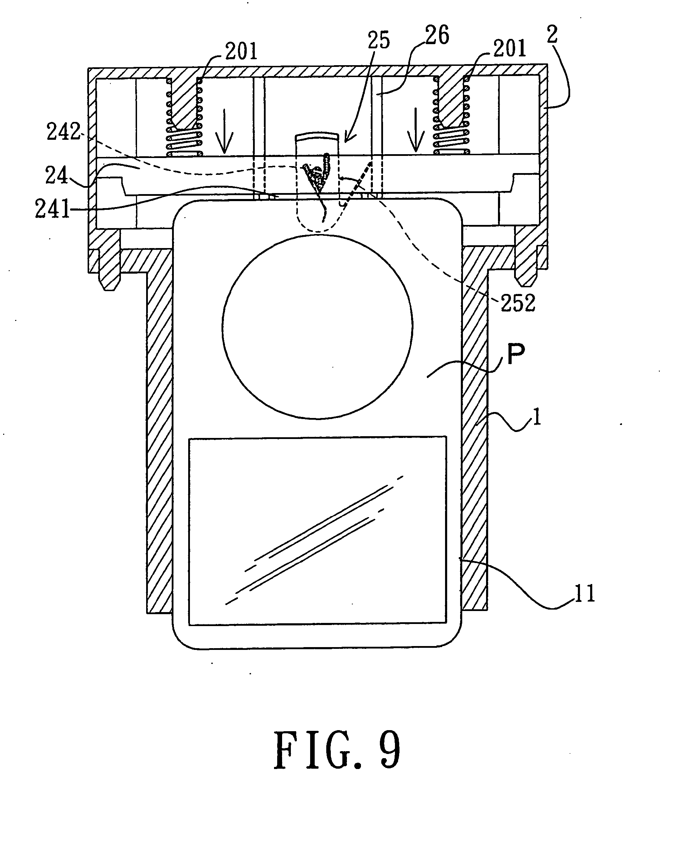

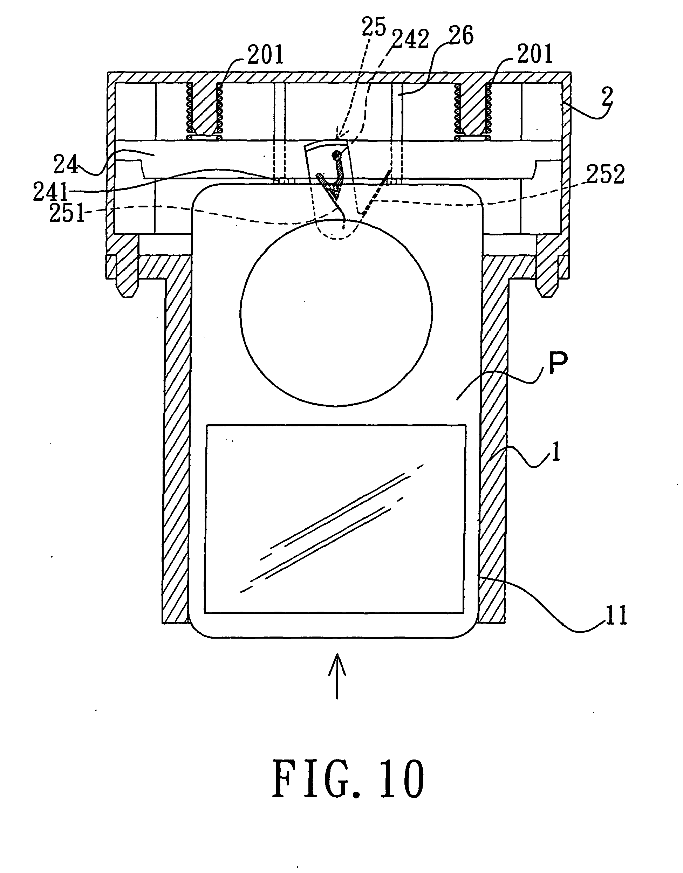

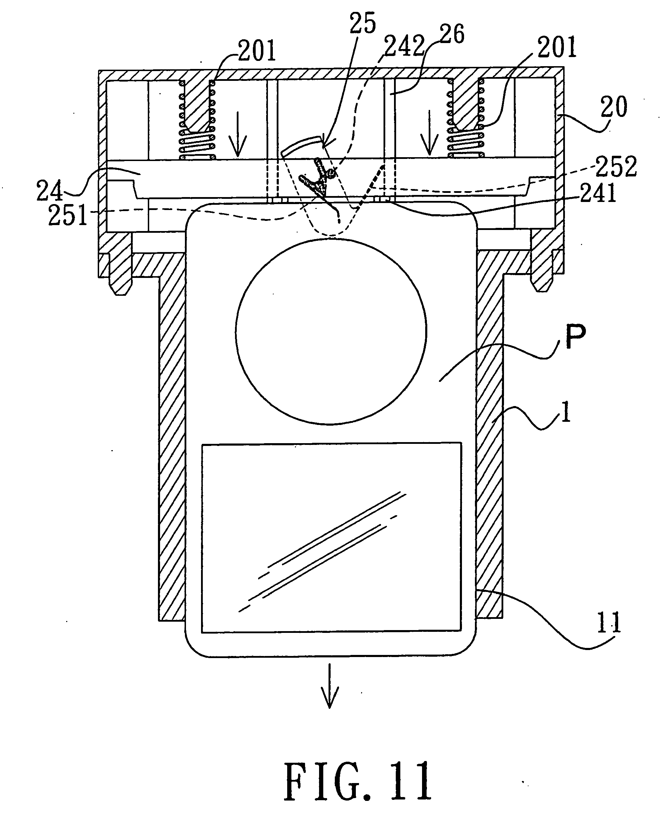

Please referring to FIGS. 7 to 11 which are sequence views of the digital player interface device of the present invention while the digital player is inserted into the digital player interface device, in which FIG. 7 depicts the status of locking mechanism 25 when the digital player P is be inserting into the through hole 11 of the adapter 1; FIG. 8 depicts the status of locking mechanism 25 when the digital player P contacts the terminal 241 of the connector carrier 24 and pushes the connector carrier 24 into the adapter-fixing element 2 along an γ-direction of the device; FIG. 9 depicts the status of locking mechanism 25 when the digital player P is located on the digital player interface device of the present invention; FIG. 10 depicts the status view of the locking mechanism 25 when the digital player P is to be loaded off from the digital player interface device of the present invention; FIG. 11 depicts the status view of the locking mechanism 25 when the digital player P has been loaded off from digital player interface device of the present invention.

Please refer to FIG. 7. When the digital player P is pushed into the through hole 11 of the adapter 1 of the digital player interface device but not yet gets contact with the connector carrier 24, the locking mechanism 25 is under an idle position, namely, the locking mechanism 25 is not interlocked with the guiding bulge 242. Next please refer to FIG. 8, when the digital player P is pushed continuously into the interface device of present invention, the digital player P will contact the terminal 241 of the connector carrier 24 and apply a force to it for inward moving, then the guiding bulge 242 contacts the Y-shape rail 251 of the locking mechanism 25 and shifts along its feature; meanwhile the Y-shape rail 251 is driven to rotate at an angle such that the locking mechanism 25 swing forwards. Please also refer to FIG. 9, when the guiding bulge 242 crosses over the left-hand top of the V-shaped portion of the Y-shape rail 251, a reaction force (counterforce) is applied due to the resilience force of the elastic member 201 provided in the adapter-fixing element 2 while the free end of the elastic arm 252 on the locking mechanism 25 is supported by a inner rib 26 within the adapter-fixing element 2; in such case, the guiding bulge 242 falls into the concave of the V-shaped portion, and the digital player P is positioned in the digital player interface device of the present invention, namely, the locking mechanism 25 and guiding bulge 242 are interlocked.

Please refer to FIG. 10, when the digital player P is to be loaded off from the interface device of the present invention, it is only required to push the digital player P inwards again, then the guiding bulge 242 is pushed to shift along the right-side of the V-shaped position of the Y-shape rail 251 and cross over the top to disengage from Y-shape rail 251, owing to the resilience force generated by the free end of the elastic arm 252 pressing against on the inner rib 26; at the same time, the connector carrier 24 is pushes outwards by the elastic member 201 to, therefore, move the digital player P protruding from the through hole 11, and thus reset the locking mechanism 25 and the connector carrier 24 as shown in FIG. 11.

In this preferred embodiment, the elastic arm 252 of the locking mechanism 25 is made of elastic materials to provide an elastic force (shown in FIG. 8), and one end of the elastic arm 252 is fixed on the adapter-fixing element 2, so that the locking mechanism 25 can flexibly swing via resilience force generated by the free end pressing against the inner rib 26 in the adapter-fixing element 2; however, the elastic arm 252 of the locking mechanism 25 is not limited to the form of elastic arm in the present invention, a torsional elastic member can be used instead of the elastic arm to provide elastic force.

According to the digital player interface device with exchangeable adapter of the present invention, it can be installed into a computer, TV, a car information system, home audio and video application or the like.

While the present invention has been particularly shown and described with reference to exemplary embodiments thereof, it will be understood by those of ordinary skill in the art that various changes and modifications may be made therein without departing from the scope of the present invention as defined by the following claims.

## Claims

1. A digital player interface device with exchangeable adapter (1), comprising:
an adapter (1), which is provided with a through hole (11) for load-on/off of a digital player, on its both end a first and a second engaging parts (12, 13) are provided, respectively;
an adapter-fixing element (2), which comprises a guiding rib (21) and a concavity (22) on its lower surface; wherein a fixing spring (23) is provided in the concavity (22); and
a chassis (3), on its top surface a guiding groove (31), a restriction groove (32) and a adapter snapper (33) are provided, wherein the guiding rib (21) of adapter-fixing element (2) is slid in the guiding groove (31), the restriction groove (32) is used for accommodating the fixing spring (23) when the adapter-fixing element (2) is at a home position, and the adapter snapper (33) is used for snapping the second engaging part (13) of the adapter (1) when the adapter (1) is placed on the chassis (3);
wherein, when the adapter (1) is sliding on the chassis (3), the adapter (1) pushes the adapter-fixing element (2) moving along the guiding groove (31), and the fixing spring (23) is released from the restriction groove (32) to engage the first engaging part (12) of the adapter (1),
wherein, when the adapter (1) is removed from the chassis (3), the adapter-fixing element (2) moves back to the home position.

2. The digital player interface device with exchangeable adapter (1) according to claim 1, wherein when the adapter (1) pushes the adapter-fixing element (2) to the end of the chassis (3), the adapter snapper (33) engages with the second engaging part (13) so that the adapter (1) is fixed on the chassis (3).

3. The digital player interface device with exchangeable adapter (1) according to claim 1 further comprising an another adapter (1') having the same structure of the adapter (1) except for the size of the through hole (11').

4. The digital player interface device with exchangeable adapter (1) according to claim 1, wherein the adapter-fixing element (2) further comprises a connector carrier (24) which moves in y-direction of the device; and a locking mechanism (25); in which
a terminal (241) is provided on the connector carrier (24) to be the interface of the digital player; at least an elastic member (201) is provided between the connector carrier (24) the and the back wall of the adapter-fixing element (2), so as to press against the connector carrier (24), and after the digital player contacts the terminal (241), enable the terminal (241) to slide flexibly within the adapter-fixing element (2) in y-direction, thus keeping the player and terminal (241) in contact.

5. The digital player device with exchangeable adapter (1) according to Claim 4, wherein the elastic member (201) provided between the connector carrier (24) and the back wall of the adapter-fixing element (2) is a compression spring.

6. The digital player device with exchangeable adapter (1) according to Claim 1, wherein the locking mechanism (25) comprises a guiding bulge (242) provided below the connector carrier (24); a rotatable Y-shape rail (251), which is used to guide the swinging direction of the locking mechanism (25) when the guiding bulge (242) below the connector carrier (24) shifts along the feature of the Y-shape rail (251); an elastic arm (251), which has a free end pressing against the inner wall of the adapter-fixing element (2) so as to adjust flexibly the position and angle of the Y-shape rail (251) with forward and backward swinging of the locking mechanism (25).

7. The digital player device with exchangeable adapter (1) according to Claim 6, wherein the elastic arm (251) is an arm extending from the locking mechanism (25) and made of elastic materials.

8. The digital player device with exchangeable adapter (1) according to Claim 6, wherein the elastic arm (251) is a wind spring.

## Patentansprüche

1. Digital-Player- bzw. -Abspielgerät-Schnittstellenvorrichtung mit auswechselbarem Adapter (1), umfassend:
einen Adapter (1), der mit einem Durchgangsloch (11) zum Einbringen/Entnehmen eines digitalen Players bzw. Abspielgeräts versehen ist, wobei an seinen beiden Enden ein erstes bzw. ein zweites Eingriffsteil (12, 13) vorgesehen ist;
ein Adapterfixier- bzw. befestigungselement (2), das eine Führungsrippe (21) und eine Konkavität (22) an seiner unteren Fläche bzw. Oberfläche umfasst; wobei eine Fixier- bzw. Befestigungsfeder (23) in der Konkavität (22) vorgesehen ist; und
ein Gehäuse (3), an dessen oberster Fläche bzw. Oberfläche eine Führungsnut bzw. -rille (31), eine Begrenzungsnut bzw. -rille (32) und ein Adapterschnapper bzw. -rastelement (33) vorgesehen sind, wobei die Führungsrippe (21) des Adapterfixierelements (2) in der Führungsnut (31) verschoben wird, die Begrenzungsnut (32) zum Aufnehmen bzw. Unterbringen der Fixierfeder (23) verwendet wird, wenn das Adapterfixierelement (2) an einer Anfangsposition ist, und der Adapterschnapper (33) zum Schnappen bzw. Verrasten des zweiten Eingriffsteils (13) des Adapters (1) verwendet wird, wenn der Adapter (1) an bzw. auf dem Gehäuse (3) platziert wird bzw. ist;
wobei, wenn der Adapter (1) an dem Gehäuse (3) gleitet, der Adapter (1) das Adapterfixierelement (2) drückt, das sich entlang der Führungsnut (31) bewegt, und die Fixierfeder (23) von bzw. aus der Begrenzungsnut (32) gelöst wird, um in das erste Eingriffsteil (12) des Adapters (1) einzugreifen,
wobei, wenn der Adapter (1) aus bzw. von dem Gehäuse (3) entfernt wird, sich das Adapterfixierelement (2) zurück zu der Anfangsposition bewegt.

2. Digitalabspielgerät-Schnittstellenvorrichtung mit auswechselbarem Adapter (1) nach Anspruch 1, wobei, wenn der Adapter (1) das Adapterfixierelement (2) zu dem Ende des Gehäuses (2) drückt, der Adapterschnapper (33) mit dem zweiten Eingriffsteil (13) in Eingriff kommt, so dass der Adapter (1) an dem Gehäuse (3) fixiert bzw. befestigt ist.

3. Digitalabspielgerät-Schnittstellenvorrichtung mit auswechselbarem Adapter (1) nach Anspruch 1, ferner umfassend einen anderen bzw. weiteren Adapter (1') mit der gleichen Struktur des Adapters (1), ausgenommen der Größe des Durchgangslochs (11').

4. Digitalabspielgerät-Schnittstellenvorrichtung mit auswechselbarem Adapter (1) nach Anspruch 1, wobei das Adapterfixierelement (2) ferner einen Verbinderträger (24), der sich in y-Richturig der Vorrichtung bewegt; und einen Verriegelungsmechanismus (25) umfasst; bei der
ein Anschluss (241) an dem Verbinderträger (24) vorgesehen ist, um die Schnittstelle des digitalen Abspielgeräts zu sein; zumindest ein elastisches Glied (201) zwischen dem Verbinderträger (24) und der Rückwand des Adapterfixierelements (2) vorgesehen ist, um gegen den Verbinderträger (24) zu pressen, und nachdem das digitale Abspielgerät den Anschluss (241) kontaktiert, den Anschluss (241) zu befähigen, flexibel innerhalb des Adapterfixierelements (2) in y-Richtung zu gleiten, wobei das Abspielgerät und der Anschluss (241) in Kontakt gehalten werden.

5. Digitalabspielgerät-Schnittstellenvorrichtung mit auswechselbarem Adapter (1) nach Anspruch 4, wobei das elastische Glied (201), das zwischen dem Verbinderträger (24) und der Rückwand des Adapterfixierelements (2) vorgesehen ist, eine Druckfeder ist.

6. Digitalabspielgerät-Schnittstellenvorrichtung mit auswechselbarem Adapter (1) nach Anspruch 1, wobei der Verriegelungsmechanismus (25) eine Führungsbauchung bzw. -wulst bzw. -vorsprung (242), die bzw. der unterhalb des Verbinderträgers (24) vorgesehen ist; eine drehbare Y-förmige Schiene (251), die zum Führen der Schwingrichtung des Verriegelungsmechanismus (25) verwendet wird, wenn sich die Führungsbauchung (242) unterhalb des Verbinderträgers (24) entlang dem Merkmal der Y-förmigen Schiene (251) verschiebt; einen elastischen Arm (251) umfasst, der ein freies Ende aufweist, dass gegen die Innenwand des Adapterfixierelements (2) presst, um die Position und den Winkel der Y-förmigen Schiene (251) mit einem Vorwärts- und Rückwärtsschwingen des Verriegelungsmechanismus (25) flexibel einzustellen.

7. Digitalabspielgerät-Schnittstellenvorrichtung mit auswechselbarem Adapter (1) nach Anspruch 6, wobei der elastische Arm (251) ein Arm ist, der sich von bzw. aus dem Verriegelungsmechanismus (25) erstreckt und aus elastischen Materialien besteht.

8. Digitalabspielgerät-Schnittstellenvorrichtung mit auswechselbarem Adapter (1) nach Anspruch 6, wobei der elastische Arm (251) eine gewundene bzw. Windungsfeder ist.

## Revendications

1. Dispositif d'interface de lecteur numérique avec adaptateur échangeable (1), comprenant :
un adaptateur (1) qui est pourvu d'un orifice traversant (11) pour l'insertion/extraction d'un lecteur numérique, sur les deux extrémités duquel une première et une seconde parties d'engagement (12, 13) sont prévues, respectivement ;
un élément de fixation d'adaptateur (2) qui comprend une nervure de guidage (21) et une concavité (22) sur sa surface inférieure ; dans lequel un ressort de fixation (23) est prévu dans la concavité (22) ; et
un châssis (3) à la surface supérieure duquel une rainure de guidage (31), une rainure de restriction (32) et un dispositif d'encliquetage d'adaptateur (33) sont prévus, dans lequel la nervure de guidage (21) de l'élément de fixation d'adaptateur (2) coulisse dans la rainure de guidage (31), la rainure de restriction (32) est utilisée pour loger le ressort de fixation (23) lorsque l'élément de fixation d'adaptateur (2) se situe en une position d'origine, et le dispositif d'encliquetage d'adaptateur (33) est utilisé pour encliqueter la seconde partie d'engagement (13) de l'adaptateur (1) lorsque l'adaptateur (1) est placé sur le châssis (3) ;
dans lequel, lorsque l'adaptateur (1) coulisse sur le châssis (3), l'adaptateur (1) pousse l'élément de fixation d'adaptateur (2) qui se déplace le long de la rainure de guidage (31) et le ressort de fixation (23) est libéré de la rainure de restriction (32) pour engager la première partie d'engagement (12) de l'adaptateur (1), dans lequel, lorsque l'adaptateur (1) est retiré du châssis (3), l'élément de fixation d'adaptateur (2) revient à la position d'origine.

2. Dispositif d'interface de lecteur numérique avec adaptateur échangeable (1) selon la revendication 1, dans lequel, lorsque l'adaptateur (1) pousse l'élément de fixation d'adaptateur (2) vers l'extrémité du châssis (3), le dispositif d'encliquetage d'adaptateur (33) s'engage avec la seconde partie d'engagement (13) de sorte que l'adaptateur (1) est fixé sur le châssis (3).

3. Dispositif d'interface de lecteur numérique avec adaptateur échangeable (1) selon la revendication 1, comprenant en outre un autre adaptateur (1') ayant la même structure que l'adaptateur (1) sauf pour la taille de l'orifice traversant (11').

4. Dispositif d'interface de lecteur numérique avec adaptateur échangeable (1) selon la revendication 1, dans lequel l'élément de fixation d'adaptateur (2) comprend en outre un support de connecteur (24) qui se déplace dans la direction y du dispositif ; et un mécanisme de verrouillage (25) ; dans lequel une borne (241) est prévue sur le support de connecteur (24) pour être l'interface du lecteur numérique ; au moins un élément élastique (201) est prévu entre le support de connecteur (24) et la paroi arrière de l'élément de fixation d'adaptateur (2) de manière à appuyer contre le support de connecteur (24), et après que le lecteur numérique vient en contact avec la borne (241), de manière à permettre à la borne (241) de coulisser de manière flexible au sein de l'élément de fixation d'adaptateur (2) dans la direction y, maintenant ainsi le lecteur et la borne (241) en contact.

5. Dispositif de lecteur numérique avec adaptateur échangeable (1) selon la revendication 4, dans lequel l'élément élastique (201) prévu entre le support de connecteur (24) et la paroi arrière de l'élément de fixation d'adaptateur (2) est un ressort de compression.

6. Dispositif de lecteur numérique avec adaptateur échangeable (1) selon la revendication 1, dans lequel le mécanisme de verrouillage (25) comprend un renflement de guidage (242) prévu en dessous du support de connecteur (24) ; un rail rotatif en forme de Y (251) qui est utilisé pour guider la direction de basculement du mécanisme de verrouillage (25) lorsque le renflement de guidage (242) en dessous du support de connecteur (24) se décale le long de la caractéristique du rail en forme de Y (251) ; un bras élastique (251) qui a une extrémité libre appuyant contre la paroi interne de l'élément de fixation d'adaptateur (2) de manière à ajuster de manière flexible la position et l'angle du rail en forme de Y (251) avec le basculement vers l'avant et l'arrière du mécanisme de verrouillage (25).

7. Dispositif de lecteur numérique avec adaptateur échangeable (1) selon la revendication 6, dans lequel le bras élastique (251) est un bras s'étendant depuis le mécanisme de verrouillage (25) et fabriqué en matériaux élastiques.

8. Dispositif de lecteur numérique avec adaptateur échangeable (1) selon la revendication 6, dans lequel le bras élastique (251) est un ressort à spirale.
